# EUROPEAN PATENT APPLICATION

(11) **EP 1 705 916 A1**
(43) Date of publication of application: **27.09.2006**
(21) Application number: 05290682.3
(22) Date of filing: 25.03.2005
(51) Int. Cl.: H04N 7/173, H04N 5/445

(54) **Interactive displaying system**

(71) Applicant: ALCATEL, 75008 Paris (FR)
(72) Inventor: Vanparijs, Frieda, 1880 Kapelle-op-Den-Bos (BE); Baekeland, Rony Alfons Maria, 2000 Antwerpen (BE); Trappeniers, Lieven Leopold Albertine, 2200 Noordewijk (Herentals) (BE); Dacquin, Hendrik Eugene Irene Nicolas, 9000 Gent (BE); Van der Meerssche, Bart Frank Juliaan, 1730 Asse (BE); Hemmeryckx-Deleersnijder, Bart Karel, 2018 Antwerpen (BE)
(74) Representative: Narmon, Gisèle Marie Thérèse

(57) **Abstract**

Interactive displaying systems (10) comprise first means (11) for composing different images (16-16''') and generating a composition (17) of the different images (16-16''') and second means (12-12''') for receiving the composition (17) and displaying the composition (17) and in response to an interaction (18) selecting at least one image (16-16''') from the composition (17) and generating a selection signal defining the selected image (16-16''') and are provided with third means (13) for collecting selection signals from different viewers (144-147) and processing the selection signals from the different viewers (144-147) and fourth means (14) for in response to the processing of the collected selection signals controlling the first means (11) for amending the composition (17). This interactive displaying system (10) allows a plurality of viewers (144-147) to watch the composition (17) and to amend this composition (17). The amending of the composition (17) comprises re-shaping, re-sizing, removing, re-accentuating and deleting images (16-16'''). The processing of the selection signals comprises categorizing selection signals, comparing selection signals with each other or with threshold values and weighting selection signals.

## Description

The invention relates to an interactive displaying system comprising
- first means for composing different images and generating a composition of the different images,
- second means for receiving the composition of the different images and displaying the composition and in response to an interaction selecting at least one image from the composition and generating at least one selection signal defining the at least one selected image.

A prior art interactive displaying system is known from US 5,633,863, which discloses an arrangement and method for transmitting and receiving mosaic video signals including sub-pictures for easy selection of a program to be viewed. A user selects a program by merely "pointing and clicking" its miniature version in the mosaic picture. The first means for composing different images and generating a composition of the different images comprise for example a television transmitter and the second means for receiving the composition of the different images and displaying the composition and in response to an interaction selecting an image from the composition and generating a selection signal defining the selected image comprise for example a television receiver. The selection signal is used inside the second means for selecting a program corresponding to the miniature version in the mosaic picture.

The known interactive displaying system is disadvantageous, inter alia, owing to the fact that it is designed to serve one viewer.

It is an object of the invention, inter alia, to provide an interactive displaying system as defined in the preamble, which can be used in a multi-viewer environment.

The interactive displaying system according to the invention is characterized in that the interactive displaying system further comprises
- third means for collecting selection signals from different viewers and processing the selection signals from the different viewers, and
- fourth means for in response to the processing of the collected selection signals controlling the first means for amending the composition.

The third means collect selection signals from different viewers and process these selection signals. So, contrary to the prior art, according to which the selection signal is used inside the second means for selecting a program corresponding to the miniature version in the mosaic picture for one viewer, according to the invention the selection signal leaves the second means and is supplied to the third means. The third means process a plurality of selection signals from a plurality of viewers and inform the fourth means. The fourth means in response control the first means for amending the composition. As a result, the interactive displaying system according to the invention can be used in a multi-viewer environment.

The invention allows a plurality of viewers to watch a composition of different images and to amend this composition in a more or less democratic way and offers new services to viewers, which is a great advantage.

The invention is further advantageous, inter alia, owing to the fact that the different images can be supplied to the first means by letting each viewer supply his own image to the first means or by letting a group of viewers supply their own image to the first means or by letting a group of viewers supply a group of images to the first means or by letting a third party supply one or more images to the first means and by combining one or more of these options. So, images forming part of the composition and/or images waiting to become part of the composition may originate from one or more viewers and/or from a third party.

An image may comprise still video or moving video (both live or recorded) and may comprise data (such as text etc.) to be displayed and may comprise a content possibly interesting to a viewer and/or a link to further content possibly interesting to the viewer. By visually selecting an image, the viewer increases his chances of getting to know this content better and/or of showing this content to other viewers. The selecting of an image may for example comprise the (single or double) clicking on an image or may for example comprise the pointing to an image together with the detecting of this pointing, without excluding further selections.

US 6,564,379 discloses a program guide system with flip and browse advertisements. US 2003/0233661 discloses a configurable system for inserting multimedia content into a broadcast stream. Both prior art documents do not disclose the combination of the first, second, third and fourth means.

An embodiment of the interactive displaying system according to the invention is characterized in that the amending of the composition comprises at least one amendment of at least five amendments, the at least five amendments comprising re-shaping an image, re-sizing an image, re-moving an image, re-accentuating an image and deleting an image.

After for example a majority of viewers has selected a first image, this first image may be re-shaped and for example get a new form which attracts more attention, and/or may be re-sized and for example get a larger size, and/or may be re-moved and for example get a new location which attracts more attention, and/or may be re-accentuated and for example get a new color which attracts more attention. A second image not selected by the majority of viewers may be re-shaped and for example get a new form which attracts less attention, and/or may be re-sized and for example get a smaller size, and/or may be re-moved and for example get a new location which attracts less attention, and/or may be re-accentuated and for example get a new color which attracts less attention, and/or may be deleted. Of course, each re-shaping, re-sizing, re-moving, re-accentuating and/or deleting of one image may have consequences for one or more other images, which may be re-shaped, re-sized, re-moved, re-accentuated, deleted and/or introduced, or not. Other amendments are not to be excluded.

An embodiment of the interactive displaying system according to the invention is characterized in that the processing of the selection signals comprises at least one process of at least four processes, the at least four processes comprising categorizing selection signals, comparing selection signals with each other, comparing selection signals with threshold values and weighting selection signals.

To for example be able to determine a number of viewers having selected an image and/or be able to determine more or less democratic majorities and minorities, the selection signals from the plurality of viewers are to be processed, for example each time interval and/or after a threshold has been reached and/or after an action has occurred. Thereto, the processing may comprise categorizing selection signals for example to determine a number of viewers that has selected an image, and/or may comprise comparing selection signals with each other for example to compare numbers of viewers with each other, and/or may comprise comparing selection signals with threshold values for example to compare numbers of viewers with the threshold values, and/or may comprise weighting selection signals for example to weight a selection signal in dependence of the kind of viewer and/or the kind of image. Other processes are not to be excluded.

An embodiment of the interactive displaying system according to the invention is characterized in that
- the first means comprise a first receiver for receiving image signals representing the different images and receiving a control signal and a first generator for in response to the control signal generating a composition signal representing the composition of the different images and a first transmitter for transmitting the composition signal to the second means,
- the second means comprise a second receiver for receiving the composition signal and a display for displaying the composition signal and a detector for detecting the interaction and a second generator for generating the selection signal and a second transmitter for transmitting the selection signal to the third means,
- the third means comprise a third receiver for receiving the selection signals from the different viewers and a processor for processing the selection signals and a third generator for generating a result signal and a third transmitter for transmitting the result signal to the fourth means, and
- the fourth means comprise a fourth receiver for receiving the result signal and a fourth generator for generating the control signal and a fourth transmitter for transmitting the control signal to the first means for amending the composition.

This embodiment is based on receivers, generators, transmitters, displays, detectors and processors, without excluding further equipment.

An embodiment of the interactive displaying system according to the invention is characterized in that the first and third and fourth receivers and the first and third and fourth generators and the first and third and fourth transmitters and the processor comprise provider equipment and the second receiver and the display and the detector and the second generator and the second transmitter comprise viewer equipment.

In this case, a service provider takes care of composing the different images and of processing the selection signals and of controlling and/or amending the composition, while a viewer for example is sitting at home watching a television (the display and the detector, the detector for detecting an interaction from the viewer via for example a remote control) coupled to a two-directional cable decoder (the second receiver and the second generator and the second transmitter) or is sitting at home or at work watching a monitor (the display) coupled to a personal computer (the second receiver and the detector and the second generator and the second transmitter, the detector for detecting an interaction from the viewer via for example a mouse) coupled to the internet.

An embodiment of the interactive displaying system according to the invention is characterized in that the first and second and third and fourth receivers and the first and second and third and fourth generators and the display and the detector and the first and second and third and fourth transmitters and the processor comprise provider equipment.

In this case, a service provider takes care of composing the different images and of displaying the composition and of processing the selection signals and of controlling and/or amending the composition, while a viewer for example is sitting in a theatre watching a large screen and providing an interaction via a light pen transmitting a general light beam for selection purposes and an individual light beam for identification purposes or providing an interaction via a personal digital assistant having a smaller screen displaying mainly the same composition and wirelessly receiving this composition and transmitting the selection signal.

An embodiment of the interactive displaying system according to the invention is characterized in that the interactive displaying system further comprises
- fifth means for reproducing sound per selected image, which fifth means comprise a fifth receiver for receiving a sound signal representing the sound per selected image and a loudspeaker for generating the sound.

The sound signal representing the sound per selected image may be supplied to the fifth means together with or separately from other sound signals representing other sound for other images and/or may be supplied together with or separately from the image signal representing the selected image. This way, a viewer may select an image, hear the sound related to this image, and wait for this image to be re-shaped, re-sized, re-moved, re-accentuated and/or deleted in dependence of the processing of the selection signals from a plurality of viewers.

An embodiment of the interactive displaying system according to the invention is characterized in that the fifth receiver and the loudspeaker comprise viewer equipment.

In this case, a viewer for example is sitting at home hearing the sound and watching a television (the fifth receiver and the loudspeaker) coupled to a two-directional cable decoder or is sitting at home or at work hearing the sound and watching a monitor coupled to a personal computer (the fifth receiver) coupled to a loudspeaker and to the internet.

An embodiment of the interactive displaying system according to the invention is characterized in that the fifth receiver and the loudspeaker comprise provider equipment.

In this case, a service provider takes care of reproducing the sound, while a viewer for example is sitting in a theatre watching a large screen.

The invention also relates to first means for use in an interactive displaying system as defined above, the first means comprising a first receiver for receiving image signals representing the different images and receiving a control signal and a first generator for in response to the control signal generating a composition signal representing the composition of the different images and a first transmitter for transmitting the composition signal to the second means, the control signal being generated by the fourth means in response to a result signal, the result signal being generated by the third means in response to having processed selection signals from different viewers.

The invention also relates to second means for use in an interactive displaying system as defined claim 1, the second means comprising a second receiver for receiving the composition signal and a display for displaying the composition signal and a detector for detecting the interaction and a second generator for generating the selection signal and a second transmitter for transmitting the selection signal to the third means, the composition signal being generated by the first means in response to a control signal, the control signal being generated by the fourth means in response to a result signal, the result signal being generated by the third means in response to having processed selection signals from different viewers.

The invention also relates to third means for use in an interactive displaying system as defined claim 1, the third means comprising a third receiver for receiving the selection signals from the different viewers and a processor for processing the selection signals and a third generator for generating a result signal and a third transmitter for transmitting the result signal to the fourth means.

The invention also relates to fourth means for use in an interactive displaying system as defined claim 1, the fourth means comprising a fourth receiver for receiving the result signal and a fourth generator for generating the control signal and a fourth transmitter for transmitting the control signal to the first means for amending the composition.

The invention also relates to an interactive displaying method comprising the steps of
- composing different images and generating a composition of the different images,
- receiving the composition of the different images and displaying the composition and in response to an interaction selecting at least one image from the composition and generating at least one selection signal defining the at least one selected image,
   characterized in that the interactive displaying method further comprises the steps of
- collecting selection signals from different viewers and processing the selection signals from the different viewers, and
- in response to the processing of the collected selection signals controlling the step of composing different images for amending the composition.

Embodiments of the first means according to the invention and of the second means according to the invention and of the third means according to the invention and of the fourth means according to the invention of the interactive displaying method according to the invention correspond with the embodiments of the interactive displaying system according to the invention.

The invention is based upon an insight, inter alia, that the prior art systems are designed to serve one viewer only, and is based upon a basic idea, inter alia, that the third and fourth means are to be added to the first and second means for serving more than one viewer.

The invention solves the problem, inter alia, to provide an interactive displaying system as defined in the preamble, which can be used in a multi-viewer environment, and is advantageous, inter alia, in that a plurality of viewers is allowed to watch a composition of different images and to amend this composition in a more or less democratic way and in that new services are offered to viewers.

These and other aspects of the invention will be apparent from and elucidated with reference to the embodiments(s) described hereinafter.
Fig. 1 shows diagrammatically a system according to the invention comprising first and second and third and fourth means according to the invention,
Fig. 2 shows diagrammatically a logical scheme for illustrating a performance of the system according to the invention, and
Fig. 3 shows diagrammatically a composition scheme for illustrating a performance of the system according to the invention.

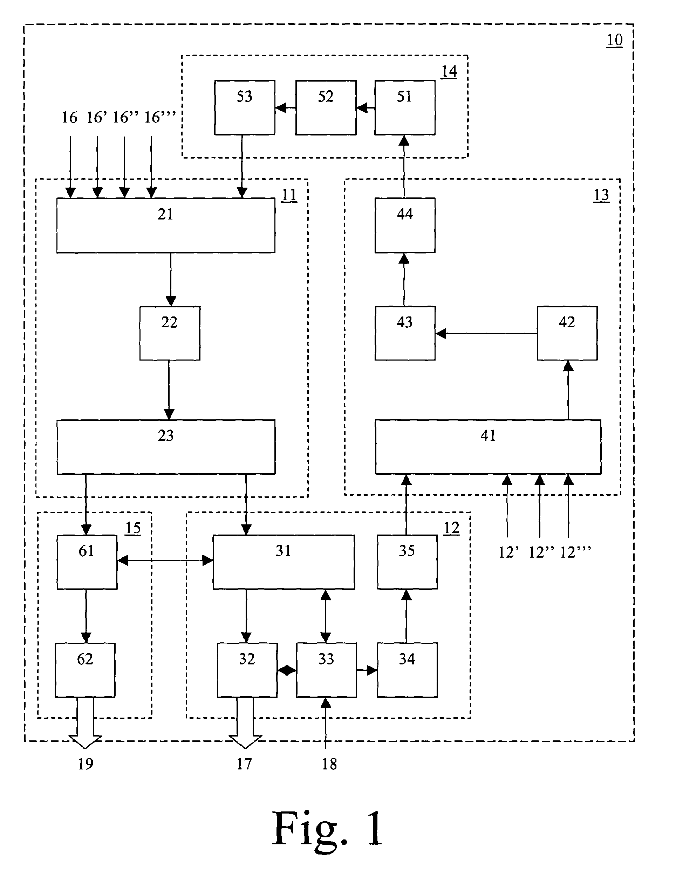

The system 10 according to the invention shown in Fig. 1 comprises first means 11 according to the invention and second means 12-12''' according to the invention and third means 13 according to the invention and fourth means 14 according to the invention and fifth means 15. The first means 11 compose different images 16-16''' and generate a composition 17 of the different images 16-16"'. Thereto, the first means 11 comprise a first receiver 21 for receiving image signals representing the different images 16-16''' and receiving a control signal and a first generator 22 for in response to the control signal generating a composition signal representing the composition 1 7 of the different images 16-16''' and a first transmitter 23 for transmitting the composition signal to the second means 12-12'''.

The second means 12-12''' receive the composition 17 of the different images 16-16''' and display the composition 17 and in response to an interaction 18 from a viewer select at least one image 16-16''' from the composition 17 and generate at least one selection signal defining the at least one selected image 16-16'''. Thereto, the second means 12-12''' comprise a second receiver 31 for receiving the composition signal and a display 32 for displaying the composition signal and a detector 33 for detecting the interaction 18 from the viewer and a second generator 34 for generating the selection signal and a second transmitter 35 for transmitting the selection signal to the third means 13.

The third means 13 collect the selection signals from the different viewers and process the selection signals from the different viewers. Thereto, the third means 13 comprise a third receiver 41 for receiving the selection signals from the different viewers and a processor 42 for processing the selection signals and a third generator 43 for generating a result signal and a third transmitter 44 for transmitting the result signal to the fourth means 14.

The fourth means 14 control in response to the processing of the collected selection signals the first means 11 for amending the composition 17. Thereto, the fourth means 14 comprise a fourth receiver 51 for receiving the result signal and a fourth generator 52 for generating the control signal and a fourth transmitter 53 for transmitting the control signal to the first means 11 for amending the composition 17.

The fifth means 15 reproduce sound 19 per selected image. Thereto, the fifth means 15 comprise a fifth receiver 61 for receiving a sound signal representing the sound 19 per selected image and a loudspeaker 62 for generating the sound 19.

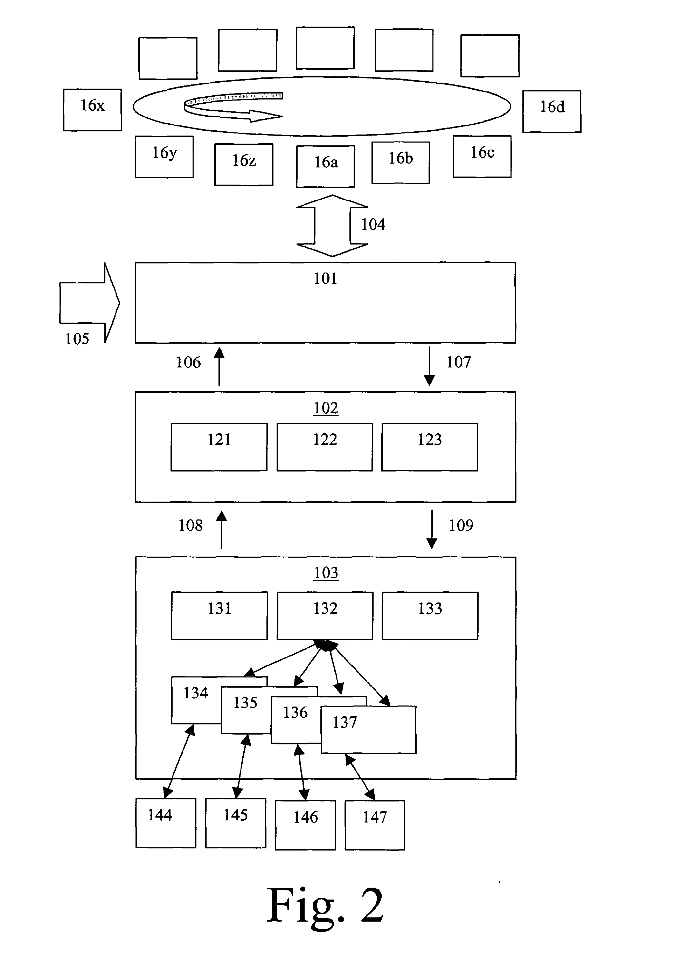

The logical scheme shown in Fig. 2 for illustrating a performance of the system 10 according to the invention comprises a carrousel with images 16a-16z. A content collector 101 can receive new content 105 such as for example new images from one or more providers and/or from one or more viewers and can communicate with the carrousel through a pointer 104 and can communicate with a screen compositor 102 through an incoming stream 106 and an outgoing stream 107. The screen compositor 102 comprises a composing circuit 121 (or process) having a composing function and a guarding circuit 122 (or process) having a guarding function and a controlling circuit 123 (or process) having a controlling function and can communicate with a feedback monitor 103 through an incoming stream 108 and an outgoing stream 109.

The feedback monitor 103 comprises a calculating circuit 131 (or process) having a calculating function and a dispatching circuit 132 (or process) having a dispatching function and a managing circuit 133 (or process) having a managing function and can communicate with viewers 144-147 via viewer monitoring instances 134-137 coupled (or linked) to the dispatching circuit 132 (or process).

The screen compositor 102 informs the content collector 101 via stream 106 of images 16 that have been terminated as determined by the controlling circuit 123 or that have been expired as determined by the guarding circuit 122 and instructs the content collector 101 via stream 106 to come up with a new image 16 as determined by the controlling circuit 123. The content collector 101 receives such a new image 16 by using its pointer 104 and supplies the new image 16 to the screen compositor 102 via the stream 107.

The screen compositor 102 provides a composition 17 of images 16 as determined by the composing circuit 121 to the feedback monitor 103 via the stream 109 and receives appreciation information as determined by the calculating circuit 131 from the feedback monitor 103.

From the viewer monitoring instances 134-137, compositions 17 are provided to the viewers 144-147, which viewers 144-147 provide their votes in return to the viewer monitoring instances 134-137. These viewer monitoring instances 134-137 communicate these votes to the dispatching circuit 132.

The relation between Fig. 1 and Fig. 2 is as follows. The viewers 144-147 each watch the composition 17 of images 16 on the display 32 of the second means 12-12''' and provide the interactions 18 to the detector 33 of the second means 12-12"'. The detector 33 of the second means 12-12''' informs the second generator 34 of the second means 12-12''', which second generator 34 generates a selection signal per viewer. This selection signal is supplied to the second transmitter 35 of the second means 12-12"', which transmitter 35 of the second means 12-12''' transmits the selection signal per viewer to the third means 13. The third receiver 41 receives the selection signals from the different viewers 144-147 and the processor 42 processes these selection signals. In response, the third generator 43 generates a result signal and the third transmitter 44 transmits the result signal to the fourth means 14. The fourth receiver 51 receives the result signal and in response the fourth generator 52 generates the control signal and the fourth transmitter 53 transmits the control signal to the first means 11 for amending the composition 17. This all is represented logically in Fig. 2 by the feedback monitor 103.

The first receiver 21 receives image signals representing the different images 16-16''' and receives the control signal and the first generator 22 generates the composition signal representing the composition 17 of the different images 16-16''' in response to the control signal and the first transmitter 23 transmits the composition signal to the second means 12-12"'. So, a first part of the first receiver 21 is represented logically in Fig. 2 by the content collector 101, and a second part of the first receiver 21 and the first generator 22 are represented logically in Fig. 2 by the screen compositor 102.

The second receiver 31 receives the composition signal representing the composition 17 of the different images 16-16''' and supplies it to the display 32 for being displayed. The detector 33 is coupled to the display 32 and to the second receiver 31 for being able to link the interaction 18 to an image 16-16''' of the composition 17 etc. as discussed further below.

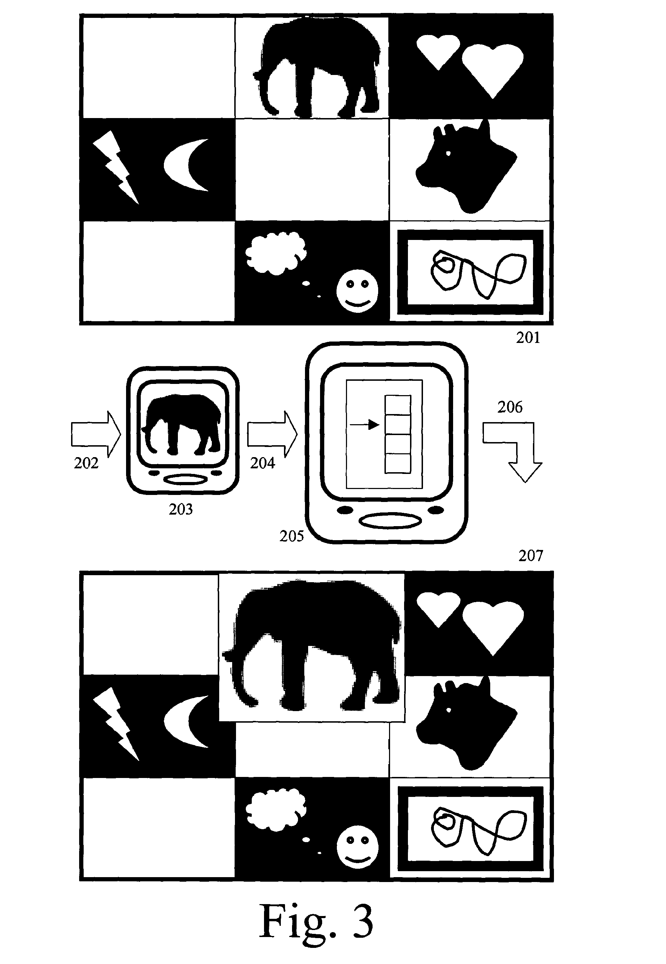

The composition scheme as shown in Fig. 3 for illustrating a performance of the system 10 according to the invention discloses a starting composition 201 which is supplied to an interaction unit 203 via a route 202. At this interaction unit 203, the starting composition 201 is displayed (not entirely shown in Fig. 3) and an image (of an elephant) is selected by a viewer, which is supplied to a further interaction unit 205 via a route 204. Alternatively, the starting composition 201 may be displayed on a large screen, and the image (of the elephant) may be selected via this large screen. The interaction unit 203 and the further interaction unit 205 may be the same unit or may be different units. At the further interaction unit 205, for the selected image an appreciation is generated by the viewer, in other words the selected image is rated by this viewer. The selection and the appreciation result in an amended composition 207 via a route 206. As a result of this viewer (and other viewers) having selected this particular image, it is displayer larger than before in the amended composition 207.

The amending of the composition 17 may comprise re-shaping an image 16-16''', re-sizing an image 16-16''', re-moving an image 16-16''', re-accentuating an image 16-16''' and/or deleting an image 16-16"'. After for example a majority of viewers has selected a first image, this first image may be re-shaped and for example get a new form which attracts more attention, and/or may be re-sized and for example get a larger size, and/or may be re-moved and for example get a new location which attracts more attention, and/or may be re-accentuated and for example get a new color which attracts more attention or get a flickering border or a flashing edge or get a sand hour for example having a changing size. A second image not selected by the majority of viewers may be re-shaped and for example get a new form which attracts less attention, and/or may be re-sized and for example get a smaller size, and/or may be re-moved and for example get a new location which attracts less attention, and/or may be re-accentuated and for example get a new color which attracts less attention or get a non-flickering border or a non-flashing edge or get a sand hour for example having a changing size, and/or may be deleted. Of course, each re-shaping, re-sizing, re-moving, re-accentuating and/or deleting of one image may have consequences for one or more other images, which may be re-shaped, re-sized, re-moved, re-accentuated, deleted and/or introduced, or not. Other amendments are not to be excluded.

The processing of the selection signals may comprise categorizing selection signals, comparing selection signals with each other, comparing selection signals with threshold values and weighting selection signals. To for example be able to determine a number of viewers having selected an image and/or be able to determine more or less democratic majorities and minorities, the selection signals from the plurality of viewers are to be processed, for example each time interval and/or after a threshold has been reached and/or after an action has occurred. Thereto, the processing may comprise categorizing selection signals for example to determine a number of viewers that has selected an image, and/or may comprise comparing selection signals with each other for example to compare numbers of viewers with each other, and/or may comprise comparing selection signals with threshold values for example to compare numbers of viewers with the threshold values, and/or may comprise weighting selection signals for example to weight a selection signal in dependence of the kind of viewer and/or the kind of image. Other processes are not to be excluded.

In a first situation, a service provider may take care of composing the different images 16-16''' and of processing the selection signals and of controlling and/or amending the composition 17, while a viewer 144-147 for example is sitting at home watching a television (the display 32 and the detector 33, the detector 33 for detecting an interaction from the viewer 144-147 via for example a remote control) coupled to a two-directional cable decoder (the second receiver 31 and the second generator 34 and the second transmitter 35) or is sitting at home or at work watching a monitor (the display 32) coupled to a personal computer (the second receiver 31 and the detector 33 and the second generator 34 and the second transmitter 35, the detector 33 for detecting an interaction from the viewer 144-147 via for example a mouse) coupled to the internet.

In this case, the first and third and fourth receivers 21,41,51 and the first and third and fourth generators 22,43,52 and the first and third and fourth transmitters 23,44,53 and the processor 42 comprise provider equipment and the second receiver 31 and the display 32 and the detector 33 and the second generator 34 and the second transmitter 35 comprise viewer equipment. The viewers 144-147 can either provide their own content such as their own images 16-16''' and appreciate these images 16-16''' to amend the composition 17 according to their preference, or the content such as the images 16-16''' is provided by one or more providers and the viewers 144-147 can appreciate these images 16-16''' to try to amend the composition 17 according to their preference.

In a second situation, a service provider may take care of composing the different images 16-16''' and of displaying the composition 17 and of processing the selection signals and of controlling and/or amending the composition, while a viewer 144-147 for example is sitting in a theatre watching a large screen and providing an interaction via a light pen transmitting a general light beam for selection purposes and an individual light beam for identification purposes or providing an interaction via a personal digital assistant having a smaller screen displaying mainly the same composition 17 and wirelessly receiving this composition 17 and transmitting the selection signal. Such a light pen and such a personal digital assistant form possible interaction units 203,205, without excluding other units.

In this case, the first and second and third and fourth receivers 21,31,41,51 and the first and second and third and fourth generators 22,34,43,52 and the display 32 and the detector 33 and the first and second and third and fourth transmitters 23,35,44,53 and the processor 42 comprise provider equipment. Again, the viewers 144-147 can either provide their own content such as their own images 16-16''' and appreciate these images 16-16''' to amend the composition 17 according to their preference, or the content such as the images 16-16''' is provided by one or more providers and.the viewers 144-147 can appreciate these images 16-16''' to try to amend the composition 17 according to their preference.

An image 16-16''' may comprise still video or moving video (both live or recorded) and may comprise data (such as text etc.) to be displayed and may comprise a content possibly interesting to a viewer 144-147 and/or a link to further content possibly interesting to the viewer 144-147. By visually selecting an image 16-16''', the viewer 144-147 increases his chances of getting to know this content better and/or of showing this content to other viewers. The selecting of an image 16-16''' may for example comprise the (single or double) clicking on an image 16-16''' or may for example comprise the pointing to an image 16-16''' together with the detecting of this pointing, without excluding further selections. The selection of an image 16-16''' may coincide with an activation of this image 16-16''' to for example enlarge this activated image 16-16''' such that it is displayed on an entire screen or to for example delete all other images 16-16''' such that it is displayed on an entire screen, and the selection of an image 16-16''' may be completely independent from an activation of this image 16-16"'. The composition 17 comprising the images 16-16''' may be a mosaic of available movies or of available advertisements or of personal contents etc. Preferably, the images 16-16''' may be accompanied by the sound 19.

Thereby, the sound signal representing the sound 19 per selected image 16-16''' may be supplied to the fifth means 15 together with or separately from other sound signals representing other sound 19 for other images 16-16''' and/or may be supplied together with or separately from the image signal representing the selected image 16-16"'. This way, a viewer 144-147 may select an image 16-16"', hear the sound 19 related to this image 16-16''', and wait for this image 16-16'''to be re-shaped, re-sized, re-moved, re-accentuated and/or deleted in dependence of the processing of the selection signals from a plurality of viewers 144-147, to realize a karaoke application or a song contest application.

Again, a viewer 144-147 might be sitting at home hearing the sound 19 and watching a television (the fifth receiver 61 and the loudspeaker 62) coupled to a two-directional cable decoder or is sitting at home or at work hearing the sound 19 and watching a monitor coupled to a personal computer (the fifth receiver 61) coupled to a loudspeaker 62 and to the internet. Or a service provider might take care of reproducing the sound 19, while a viewer 144-147 for example is sitting in a theatre watching a large screen. Then, either each viewer 144-147 receives and hears the sound 19 individually, or all viewers 144-147 receive and hear the sound 19 together and non-individually, whereby rules might be designed to determine which sound is to be reproduced.

About Fig. 2, the following is to be noted and is included in this invention. The screen compositor 102 is a deciding block where the displayed content, provided from for example different content providers, is decided upon. It manages a list of images 16 such as snippets that are currently displayed. It interacts with the content collector 101 for adding and removing snippets from the screen.

On a regular basis, the screen compositor 102 receives appreciation information for all snippets from the calculating circuit 131 of the feedback monitor 103. Based on this information, the screen compositor 102 for example re-shapes a screen lay-out. An available screen size is divided amongst content snippets relative to the appreciation they have received. If the appreciation information comes below a certain threshold, the screen compositor 102 removes it from the screen, returns it to content collector 101, and asks the content collector for a new snippet. This new content snippet is displayed on the screen with a standard initial size. The screen compositor 102 can implement any procedure to vary the shape of the snippet on the mosaic screen. Shapes could e.g. visually indicate that a timer is about to fire, or the lower threshold is almost reached. Also possible are borders of each of the images which borders can vary depending on the number of viewers 144-147 who are focusing at that moment on this snippet (e.g. a thick line represents many viewers 144-147 while a thin line represent a few viewers 144-147).

The feedback monitor 103 is the block responsible for monitoring the viewers 144-147 who are watching the content. The feedback monitor 103 has a number of viewer monitoring instances 134-137. Each viewer monitoring instance 134-137 takes care of a viewer 144-147. It monitors to which snippet the viewer 144-147 is pointing or which channel this viewer 144-147 is selecting (in case no specific pointers are foreseen, e.g. on a traditional remote control). It receives the inputs from the viewer 144-147, such as a pointing location, a selection of a snippet, a vote, a rate etc.

On a regular interval, the calculating circuit 131 collects the appreciation information of the viewer monitoring instance 134-137, and makes a for example global calculation. This global calculation is then passed to the screen compositor 102. The feedback monitor 103 also has a dispatching circuit 132 which receives the screen layout from the screen compositor 102 and dispatches it to all viewer monitoring instance 134-137.

In an extension, in case of the viewers 144-147 being equipped with a pointing device, such as a separate I/R pointer on the remote control, or a mouse, or a personal digital assistant etc., by pointing to a content snippet, the viewer 144-147 hears the audio, and sees the experience belonging to this snippet. From a pure technical point of view, the feedback monitor 103 can then be seen as a client server system, where the server monitors the viewing behavior of the clients. The video (the composition 17) that is sent to all clients is the same, but the audio can be different for each client and is based on the pixel to which the client device is pointing. Each client system, a handheld or a mobile, has a means to point to a pixel belonging to a content snippet. A personal digital assistant user can use his pen to do this, a mobile user can use some keys to shift right, left, up and down. If a certain type of mobile has no mouse-like capabilities, a cross could be shown in overlay, in the middle of the screen, and the screen could be shifted left, right,up,down using the keys. The cross might indicate which snippet is selected. A remote control user can use a pen (if available) or the standard arrow keys.

Watching a snippet for example through eye movement detection or pointing to a snippet together with detection of the pointing may already provide some votes. A watching viewer 144-147 can further explicitly vote with an appreciation or a rate, after having selected the snippet. The time during which a content snippet is watched or explicitly selected may also be important for vote counting. The popular snippets thus stay on the screen, and get bigger. The less popular get smaller, and fade away.

This system 10 might be set up in a theatre organizing a competition where all visitors can are invited to bring their own content. The content collector 101 collects all content snippets. All visitors in the theatre can use their handheld device such as a personal digital assistant or mobile to pass a pointer over the content snippet. They see the experience belonging to all snippets on the big screen and hear the matching audio in their headset. They can also select the snippet and vote. In this case the snippet might also be shown full screen on their handheld device. The user with the most popular snippet wins the personal content viewing contest.

This system 10 might also be used for interactive television, where any viewer 144-147 can upload his personal content to a central content collector 101, for example via the internet. Any viewer 144-147 who has this application on his television and/or who has a subscription can watch all content snippets simultaneously, and influence the composition 17. The viewer 144-147 could also use his personal digital assistant, remote control with display or mobile to select the snippet. Or a simple pointing device could also be made to point to the snippet on the screen.

A karaoke application could be built, enabling multiple singers to sing together. The viewer can zap between these singers, vote for the best contestants, and voting the lousy ones away.

The invention could also be used in advertisement. A viewer 144-147 watching a television with a border of advertisements can influence the adds being broadcasted, and is therefore invited to actively view the advertisements. This provides additional value to advertising industry, to overcome the fact that advertisements are possibly going to be filtered.

About Fig. 1, the following is to be noted and is included in this invention. Each unidirectional arrow illustrates a coupling from an input to an output and illustrates two blocks being coupled. Each bidirectional arrow illustrates a coupling from an in/output to an in/output and illustrates two blocks being coupled. Each unidirectional arrow may be replaced by a bidirectional arrow to allow signals to flow in both directions, and each bidirectional arrow may be replaced by two separate and opposite unidirectional arrows. Each arrow may indicate a wired coupling or a wireless coupling. Each block may be hardware, software or a mixture of both.

Each one of the means 11-15 might be integrated with any other means 11-15, in which case a combination of a transmitter and a receiver can be deleted and/or replaced by an interface. And in each means 11-15, each two or more blocks may be integrated into one new block. In the first means 11, the first transmitter 23 for transmitting the composition signal to the second means 12-12''' might be used for transmitting other video as well to the second means 12-12''' or not. In the second means 12-12"', the second receiver 31 might be used for receiving other video as well, or not. The second transmitter 35 might be used for transmitting other signals as well to the third means 13, or not. In the third means 13, the third receiver 41 might be used for receiving the other signals as well, or not. The third transmitter 44 might be used for transmitting other signals as well to the fourth means 14, or not. In the fourth means 14, the fourth receiver 51 might be used for receiving the other signals as well, or not. The fourth transmitter 53 might be used for transmitting other signals as well to the first means 11, or not. And the first receiver 21 might be used for receiving the other signals as well, or not.

In a future embodiment, the second (and fifth) means 12 (and 15) form part of a UMTS handheld, and the first and third and fourth means form at least partly part of a UMTS network and form possibly further at least partly part of a provider network.

The construction of the detector 33 coupled to the display 32, to the second receiver 31 and to the generator 34 is an arbitrary construction. In a minimum situation, a viewer is for example touching a touch screen to interact, or shining with a light pen discussed before, or outputting his selection through voice and voice recognition etc. In a more extended situation, a viewer for example controls a personal digital assistant or a remote control etc. In a maximum situation, a viewer for example has the second means 12 entirely in his hand, possibly supported by a further screen and a further loudspeaker etc.

The expression "for" in for example "for composing", "for generating", "for receiving" and "for displaying" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

The steps of composing, receiving, collecting, controlling etc. do not exclude further steps, like for example, inter alia, the steps described for the Figures etc.

## Claims

1. Interactive displaying system (10) comprising
- first means (11) for composing different images (16-16"') and generating a composition (17) of the different images (16-16"'),
- second means (12-12''') for receiving the composition (17) of the different images (16-16"') and displaying the composition (17) and in response to an interaction (18) selecting at least one image (16-16''') from the composition (17) and generating at least one selection signal defining the at least one selected image (16-16'''),
**characterized in that** the interactive displaying system (10) further comprises
- third means (13) for collecting selection signals from different viewers and processing the selection signals from the different viewers, and
- fourth means (14) for in response to the processing of the collected selection signals controlling the first means (11) for amending the composition (17).

2. Interactive displaying system (10) as defined in claim 1, **characterized in that** the amending of the composition comprises at least one amendment of at least five amendments, the at least five amendments comprising re-shaping an image, re-sizing an image, re-moving an image, re-accentuating an image and deleting an image.

3. Interactive displaying system (10) as defined in claim 1 or 2, **characterized in that** the processing of the selection signals comprises at least one process of at least four processes, the at least four processes comprising categorizing selection signals, comparing selection signals with each other, comparing selection signals with threshold values and weighting selection signals.

4. Interactive displaying system (10) as defined in claim 1, 2 or 3, **characterized in that**
- the first means (11) comprise a first receiver (21) for receiving image signals representing the different images (16-16''') and receiving a control signal and a first generator (22) for in response to the control signal generating a composition signal representing the composition (17) of the different images (16-16''') and a first transmitter (23) for transmitting the composition signal to the second means (12-12'''),
- the second means (12-12''') comprise a second receiver (31) for receiving the composition signal and a display (32) for displaying the composition signal and a detector (33) for detecting the interaction (18) and a second generator (34) for generating the selection signal and a second transmitter (35) for transmitting the selection signal to the third means (13),
- the third means (13) comprise a third receiver (41) for receiving the selection signals from the different viewers and a processor (42) for processing the selection signals and a third generator (43) for generating a result signal and a third transmitter (44) for transmitting the result signal to the fourth means (14), and
- the fourth means (14) comprise a fourth receiver (51) for receiving the result signal and a fourth generator (52) for generating the control signal and a fourth transmitter (53) for transmitting the control signal to the first means (11) for amending the composition (17).

5. Interactive displaying system (10) as defined in claim 4, **characterized in that** the first and third and fourth receivers (21,41,51) and the first and third and fourth generators (22,43,52) and the first and third and fourth transmitters (23,44,53) and the processor (42) comprise provider equipment and the second receiver (31) and the display (32) and the detector (33) and the second generator (34) and the second transmitter (35) comprise viewer equipment.

6. Interactive displaying system (10) as defined in claim 4, **characterized in that** the first and and second and third and fourth receivers (21,31,41,51) and the first and second and third and fourth generators (22,34,43,52) and the display (32) and the detector (33) and the first and second and third and fourth transmitters (23,35,44,53) and the processor (42) comprise provider equipment.

7. Interactive displaying system (10) as defined in claim 4, 5 or 6, **characterized in that** the interactive displaying system (10) further comprises
- fifth means (15) for reproducing sound (19) per selected image, which fifth means (15) comprise a fifth receiver (61) for receiving a sound signal representing the sound (19) per selected image and a loudspeaker (62) for generating the sound (19).

8. Interactive displaying system (10) as defined in claim 7, **characterized in that** the fifth receiver (61) and the loudspeaker (62) comprise viewer equipment.

9. Interactive displaying system (10) as defined in claim 7, **characterized in that** the fifth receiver (61) and the loudspeaker (62) comprise provider equipment.

10. First means (11) for use in an interactive displaying system (10) as defined claim 1, the first means (11) comprising a first receiver (21) for receiving image signals representing the different images (16-16''') and receiving a control signal and a first generator (22) for in response to the control signal generating a composition signal representing the composition (17) of the different images (16-16''') and a first transmitter (23) for transmitting the composition signal to the second means (12-12'''), the control signal being generated by the fourth means (14) in response to a result signal, the result signal being generated by the third means (13) in response to having processed selection signals from different viewers.

11. Second means (12-12''') for use in an interactive displaying system (10) as defined claim 1, the second means (12-12''') comprising a second receiver (31) for receiving the composition signal and a display (32) for displaying the composition signal and a detector (33) for detecting the interaction (18) and a second generator (34) for generating the selection signal and a second transmitter (35) for transmitting the selection signal to the third means (13), the composition signal being generated by the first means (11) in response to a control signal, the control signal being generated by the fourth means (14) in response to a result signal, the result signal being generated by the third means (13) in response to having processed selection signals from different viewers.

12. Third means (13) for use in an interactive displaying system (10) as defined claim 1, the third means (13) comprising a third receiver (41) for receiving the selection signals from the different viewers and a processor (42) for processing the selection signals and a third generator (43) for generating a result signal and a third transmitter (44) for transmitting the result signal to the fourth means (14).

13. Fourth means (14) for use in an interactive displaying system (10) as defined claim 1, the fourth means (14) comprising a fourth receiver (51) for receiving the result signal and a fourth generator (52) for generating the control signal and a fourth transmitter (53) for transmitting the control signal to the first means (11) for amending the composition (17).

14. Interactive displaying method comprising the steps of
- composing different images (16-16"') and generating a composition (17) of the different images (16-16"'),
- receiving the composition (17) of the different images (16-16"') and displaying the composition (17) and in response to an interaction (18) selecting at least one image (16-16''') from the composition (17) and generating at least one selection signal defining the at least one selected image (16-16'''),
**characterized in that** the interactive displaying method further comprises the steps of
- collecting selection signals from different viewers and processing the selection signals from the different viewers, and
- in response to the processing of the collected selection signals controlling the step of composing different images for amending the composition (17).

## Amended claims

### Amended claims in accordance with Rule 86(2) EPC.

**1.** Interactive displaying system (10) comprising
- first means (11) for composing different images (16-16''') and generating a composition (17) of the different images (16-16'''),
- second means (12-12''') for receiving the composition (17) of the different images (16-16''') and displaying the composition (17) and in response to an interaction (18) selecting at least one image (16-16''') from the composition (17) and generating at least one selection signal defining the at least one selected image (16-16'''),
**characterized in that** the interactive displaying system (10) further comprises
- third means (13) for collecting selection signals from different viewers and processing the selection signals from the different viewers, and
- fourth means (14) for in response to the processing of the collected selection signals controlling the first means (11) for amending the composition (17).

**2.** Interactive displaying system (10) as defined in claim 1, **characterized in that** the amending of the composition comprises at least one amendment of at least five amendments, the at least five amendments comprising re-shaping an image, re-sizing an image, re-moving an image, re-accentuating an image and deleting an image.

**3.** Interactive displaying system (10) as defined in claim 1 or 2, **characterized in that** the processing of the selection signals comprises at least one process of at least four processes, the at least four processes comprising categorizing selection signals, comparing selection signals with each other, comparing selection signals with threshold values and weighting selection signals.

**4.** Interactive displaying system (10) as defined in claim 1, 2 or 3, **characterized in that**
- the first means (11) comprise a first receiver (21) for receiving image signals representing the different images (16-16''') and receiving a control signal and a first generator (22) for in response to the control signal generating a composition signal representing the composition (17) of the different images (16-16''') and a first transmitter (23) for transmitting the composition signal to the second means (12-12'''),
- the second means (12-12''') comprise a second receiver (31) for receiving the composition signal and a display (32) for displaying the composition signal and a detector (33) for detecting the interaction (18) and a second generator (34) for generating the selection signal and a second transmitter (35) for transmitting the selection signal to the third means (13),
- the third means (13) comprise a third receiver (41) for receiving the selection signals from the different viewers and a processor (42) for processing the selection signals and a third generator (43) for generating a result signal and a third transmitter (44) for transmitting the result signal to the fourth means (14), and
- the fourth means (14) comprise a fourth receiver (51) for receiving the result signal and a fourth generator (52) for generating the control signal and a fourth transmitter (53) for transmitting the control signal to the first means (11) for amending the composition (17).

**5.** Interactive displaying system (10) as defined in claim 4, **characterized in that** the first and third and fourth receivers (21,41,51) and the first and third and fourth generators (22,43,52) and the first and third and fourth transmitters (23,44,53) and the processor (42) comprise provider equipment and the second receiver (31) and the display (32) and the detector (33) and the second generator (34) and the second transmitter (35) comprise viewer equipment.

**6.** Interactive displaying system (10) as defined in claim 4, **characterized in that** the first and and second and third and fourth receivers (21,31,41,51) and the first and second and third and fourth generators (22,34,43,52) and the display (32) and the detector (33) and the first and second and third and fourth transmitters (23,35,44,53) and the processor (42) comprise provider equipment.

**7.** Interactive displaying system (10) as defined in claim 4, 5 or 6, **characterized in that** the interactive displaying system (10) further comprises
- fifth means (15) for reproducing sound (19) per selected image, which fifth means (15) comprise a fifth receiver (61) for receiving a sound signal representing the sound (19) per selected image and a loudspeaker (62) for generating the sound (19).

**8.** Interactive displaying system (10) as defined in claim 7, **characterized in that** the fifth receiver (61) and the loudspeaker (62) comprise viewer equipment.

**9.** Interactive displaying system (10) as defined in claim 7, **characterized in that** the fifth receiver (61) and the loudspeaker (62) comprise provider equipment.

**10.** Third means (13) as defined in claim 4.

**11.** Fourth means (14) as defined in claim 4.

**12.** Interactive displaying method comprising the steps of
- composing different images (16-16''') and generating a composition (17) of the different images (16-16'''),
- receiving the composition (17) of the different images (16-16''') and displaying the composition (17) and in response to an interaction (18) selecting at least one image (16-16''') from the composition (17) and generating at least one selection signal defining the at least one selected image (16-16'''),
**characterized in that** the interactive displaying method further comprises the steps of
- collecting selection signals from different viewers and processing the selection signals from the different viewers, and
- in response to the processing of the collected selection signals controlling the step of composing different images for amending the composition (17).
